(19) Europäisches Patentamt
European Patent Office
Office européen des brevets

(11) EP 0 680 107 B1

(12) EUROPEAN PATENT SPECIFICATION

(45) Date of publication and mention
of the grant of the patent:
**22.07.1998 Bulletin 1998/30**

(51) Int Cl.6: **H01M 10/34**, H01M 2/16,
H01M 2/18

(21) Application number: **95302454.4**

(22) Date of filing: **12.04.1995**

(54) **Nickel-hydrogen secondary battery**

Nickelwasserstoff Sekundärbatterie

Batterie rechargeable du type nickel-hydrogène

(84) Designated Contracting States:
**DE FR GB**

(30) Priority: **15.04.1994 JP 77162/94**
**18.01.1995 JP 5747/95**

(43) Date of publication of application:
**02.11.1995 Bulletin 1995/44**

(73) Proprietors:
• **KABUSHIKI KAISHA TOSHIBA**
**Kawasaki-shi, Kanagawa-ken 210 (JP)**
• **TOSHIBA BATTERY CO., LTD.**
**Tokyo, 104 (JP)**

(72) Inventors:
• **Hayashida, Hirotaka**
**Minato-ku, Tokyo 105 (JP)**
• **Teraoka, Hirohito**
**Minato-ku, Tokyo 105 (JP)**
• **Ono, Tomoyuki**
**Minato-ku, Tokyo 105 (JP)**
• **Soeda, Tsuyoshi**
**Minato-ku, Tokyo 105 (JP)**

(74) Representative: **Shindler, Nigel**
**BATCHELLOR, KIRK & CO.**
**2 Pear Tree Court**
**Farringdon Road**
**London EC1R 0DS (GB)**

(56) References cited:
**EP-A- 0 450 449          EP-A- 0 563 773**
**US-A- 3 765 948**

• **PATENT ABSTRACTS OF JAPAN vol. 15 no. 209**
**(E-1072) ,28 May 1991 & JP-A-03 059957**
**(TOSHIBA CORP)**
• **PATENT ABSTRACTS OF JAPAN vol. 16 no. 134**
**(E-1185) & JP-A-03 295177 (MATSUSHITA**
**ELECTRIC IND CO)**
• **PATENT ABSTRACTS OF JAPAN vol. 16 no. 469**
**(E-1271) ,29 September 1992 & JP-A-04 167355**
**(KURARAY CO LTD)**

Remarks:
The file contains technical information submitted
after the application was filed and not included in this
specification

**Description**

This invention relates to a nickel-hydrogen secondary battery and a method for manufacturing the nickel-hydrogen secondary battery, and in particular to a nickel-hydrogen secondary battery and a method for manufacturing the nickel-hydrogen secondary battery wherein the structure of a separator interposed between a paste-type positive electrode and a paste-type negative electrode is improved.

There is conventionally known a nickel-hydrogen secondary battery having a structure wherein a group of electrodes comprising a paste-type positive electrode containing nickel hydroxide and a polymeric binder such as, carboxymethyl cellulose or polytetrafluoroethylene, a paste-type negative electrode containing a hydrogen-absorbing alloy and a polymeric binder such as, carboxymethyl cellulose or polytetrafluoroethylene and a separator interposed between these electrodes is accommodated in a case together with alkali electrolyte. This nickel-hydrogen secondary battery is interchangeable, in terms of voltage, with a nickelcadmium secondary battery comprising a negative electrode containing a cadmium compound in place of the above-mentioned hydrogen-absorbing alloy and is excellent in performance as it has a higher capacity as compared with the nickel-cadmium secondary battery.

However, since the structure of the nickel-hydrogen secondary battery is basically the same as that of the nickel-cadmium secondary battery, the storage of the nickel-hydrogen secondary battery in its charged state under a high temperature condition will raise a problem of self-discharge as in the case of nickel-cadmium secondary battery.

This self-discharge during a high temperature storage of the nickel-cadmium secondary battery is considered to be caused by two factors, i.e. (a) a reducing reaction of nickel oxyhydroxide (NiOOH) which is a product resulting from the charging at the positive electrode due to the generation of impurities (for example, nitrate ion, nitrite ion or ammonia) in an oxidative destruction of the separator; (b) the self-decomposition reaction of NiOOH. Since the self-decomposition reaction of NiOOH (b) is not so active as compared with the above-mentioned reducing reaction of NiOOH, the main cause of self-discharge reaction during a high temperature storage of the nickel-hydrogen secondary battery is considered to be the reducing reaction of NiOOH (a) rather than the reaction of NiOOH (b).

This oxidative destruction of the separator becomes more prominent when a nonwoven fabric comprising a hydrophilic polyamide fiber which is commonly employed in a nickel-cadmium secondary battery is employed as the separator. This is because an impurity such as nitrate ion to be generated by the oxidative decomposition of polyamide synthetic resin fibers causes the reducing of NiOOH of the positive electrode thereby promoting the self-discharge reaction.

Due to this reason, a polyolefin fiber which is excellent in resistance to oxidation but inherently hydrophobic is proposed to be employed as the separator after denaturing the polyolefin fiber through a treatment into hydrophilic fiber. Relevant prior art documents are for example EP-A-563 773, EP-A-450 449 and US-A-3,765,948.

Meanwhile, in the nickel-hydrogen secondary battery, a hydrogen-absorbing alloy is employed as a negative electrode in contrast to the nickel-cadmium secondary battery, whereby achieving a higher capacity as compared with the nickel-cadmium secondary battery. This hydrogen-absorbing alloy in the negative electrode is capable of absorbing and desorbing hydrogen gas depending on the ambient temperature and pressure. This reversible hydrogen gas-absorbing and desorbing property of the hydrogen-absorbing alloy is utilized in the nickel-hydrogen secondary battery in such a manner that the absorption and desorption of hydrogen gas is performed in a battery case through an electrochemical means in stead of utilizing temperature and pressure thereby realizing the production of a secondary battery having a higher capacity than that of the nickel-cadmium secondary battery. The equilibrium pressure at a given temperature and the hydrogen absorption capacity in the hydrogen-absorbing alloy is determined by the composition of the hydrogen-absorbing alloy. Although the equilibrium pressure and the hydrogen absorption capacity in the hydrogen-absorbing alloy are variable more or less depending on the composition of the hydrogen-absorbing alloy as mentioned above, there is a general trend that when the temperature is increased, the equilibrium pressure becomes proportionally higher and the hydrogen absorption capacity is decreased. Accordingly, when the hydrogen absorption capacity of the alloy is decreased, an excessive amount of hydrogen gas which can no more be sustained by the hydrogen-absorbing alloy is caused to be released into the interior of the battery case.

In the nickel-hydrogen secondary battery provided with a negative electrode containing a hydrogen-absorbing alloy of such a nature as mentioned above, when it is stored in a high temperature, the equilibrium pressure thereof is increased so that the hydrogen absorption capacity of the alloy is decreased thereby causing the release of hydrogen gas to fill the interior of the battery case with the released hydrogen gas. This phenomenon would be impossible in the case of the nickel-cadmium secondary battery. Since the released hydrogen gas is kept within the battery case at a high concentration, a reaction of reducing nickel oxyhydroxide (NiOOH) constituting a positive electrode is caused. Therefore, in order to solve the problem of self-discharge during a high temperature storage in the nickel-hydrogen secondary battery, it is necessary to avoid the above-mentioned two factors, i.e. (a) a reaction of reducing nickel oxyhydroxide (NiOOH) which is a product resulting from the charging at the positive electrode due to the generation of impurities in an oxidative destruction of the separator, and (b) the self-decomposition reaction of NiOOH, as well as to avoid an additional factor (c) a phenomenon that is impossible in the case of the nickel-cadmium secondary battery, i.e. the reaction of reducing nickel oxyhydroxide (NiOOH) by hydrogen gas which would be inevitably released from the hydrogen-absorbing alloy during the storage of it in a high temperature.

For solving these problems, some idea has to be taken in order to prevent the hydrogen gas to be inevitably generated from a negative electrode containing hydrogen absorbing alloy during the storage thereof at a high temperature from reaching the paste-type positive electrode.

Additionally, since the nickel-hydrogen secondary battery is a secondary battery just like the nickelcadmium secondary battery, oxygen gas is also caused to generate in the occasion of over-charging from the positive electrode according to the following chemical formula.

$$4OH^- \rightarrow O_2 + 2H_2O + 4e^- \tag{1}$$

The oxygen gas thus generated is passed through a separator and consumed at the surface of the hydrogen-absorbing alloy according to the following chemical formulas (2) and (3).

$$2MH + 1/2O_2 \rightarrow 2M + H_2O \tag{2}$$

$$2M + 2H_2O + 2e^- \rightarrow 2MH + 2OH^- \tag{3}$$

These oxygen-absorbing reactions (2) and (3) by the negative electrode are caused to occur at the boundary of three phases, i.e. the surface of the negative electrode, an electrolyte on the surface of the negative electrode and the oxygen gas. Accordingly, it is very important for controlling the increase in inner pressure of the battery to create a suitable three-phases boundary on the surface of the negative electrode. However, since the polymeric binder is highly water-absorptive in the case of a paste-type negative electrode containing the polymeric binder together with the hydrogen-absorbing alloy, the creation of such a suitable three-phases boundary is very difficult.

Accordingly, there has been proposed to manufacture the negative electrode by co-using a water-repellent material such as polytetrafluoroethylene as a binder, or by coating the surface of the negative electrode with a water-repellent solution such as a suspension of polytetrafluoroethylene. However, there are several problems in forming a water-repellent surface on the negative electrode by these measures. A first problem is an increase in inner pressure of the battery, since it is difficult to obtain a sufficient degree of water-repellency on the surface of the negative electrode by such measures as mentioned above. A second problem is a disadvantage in obtaining a nickel-hydrogen secondary battery of high capacity. Namely, if it is desired to realize a high capacity in a nickel-hydrogen secondary battery, the amount of an active material has to be increased in a paste-type positive electrode, and at the same time the capacity of a paste-type negative electrode containing a hydrogen-absorbing alloy has to be increased in proportion to the increase in capacity of the positive electrode in order to avoid any bad influence to the gas absorption in the occasion of over-charge and to cycle life. However, since the addition of a water-repellent material such as polytetrafluoroethylene brings about in turn the corresponding reduction of the ratio of hydrogen-absorbing alloy in the negative electrode thereby sacrificing the increasing of capacity of the nickelhydrogen secondary battery. A third problem is the complication of manufacturing process due to the provision of water-repellency. Accordingly, it is required for the nickel-hydrogen secondary battery to assure an excellent gas permeability of a separator and to create a sufficient degree of the three-phase boundary without deteriorating a high capacity of the battery.

As explained above, in order to inhibit the self-discharge in the nickel-hydrogen secondary battery, some measures have to be taken in order to prevent the hydrogen gas to be inevitably generated from a negative electrode containing hydrogen absorbing alloy during the storage thereof at a high temperature from reaching the paste-type positive electrode. On the other hand, in order to inhibit the increase in inner pressure of the battery in the occasion of over-charging without causing the lowering of capacity, it is required for the nickel-hydrogen secondary battery to assure an excellent gas permeability of a separator and to create a uniform and sufficient degree of the three-phase boundary throughout the surface of the negative electrode. Since there are many conflicting problems between the inhibition of self-discharge during a high temperature storage of the secondary battery and the inhibition of increase in inner pressure in the occasion of over-charging, it has been very difficult to realize both of the inhibitions.

Accordingly, the object of the present invention is to provide a nickel-hydrogen secondary battery of long life, having an improved self-discharging property at a high temperature storage and being capable of inhibiting an increase in inner pressure in the occasion of over-charging.

Another object of this invention is to provide a method for manufacturing a nickel-hydrogen secondary battery having excellent properties as mentioned above.

Namely, according to the present invention, there is provided a nickel-hydrogen secondary battery comprising;

a case,
a paste-type positive electrode accommodated in the case and containing nickel hydroxide and a polymeric binder,
a paste-type negative electrode accommodated in the case and containing a hydrogen-absorbing alloy and a polymeric binder,
a separator accommodated in the case in such a manner as to be interposed between the positive and negative electrodes, and
an alkali electrolyte accommodated in the case;
wherein the separator is formed of a sheet material containing polyolefin-based synthetic resin fibers and has a first surface being made hydrophilic and a second surface located opposite to the first surface, and having a hydrophilic portion and a hydrophobic portion as defined in claim 1, separator being interposed between the positive and negative electrodes in such a manner that the second surface faces toward the negative electrode.

According to the present invention, there is further provided a method for manufacturing a nickel-hydrogen secondary battery comprising a case, a paste-type positive electrode accommodated in the case and containing nickel hydroxide and a polymeric binder, a paste-type negative electrode accommodated in the case and containing a hydrogen-absorbing alloy and a polymeric binder, a separator accommodated in the case in such a manner as to be interposed between the positive and negative electrodes, and an alkali electrolyte accommodated in the case; wherein the separator is formed by the steps of;

embossing a first surface of a sheet material containing polyolefin-based synthetic resin fibers thereby forming an embossed film portion; dipping the sheet material into a solution containing a vinyl monomer having a hydrophilic group so as to attaching the solution to the first surface and a second surface located opposite to the first surface except the embossed film portion; and irradiating an energy beam onto the sheet material thereby graft-polymerizing the vinyl monomer attached to the sheet material;
the separator being interposed between the positive and negative electrodes in such a manner that the second surface is faced toward the negative electrode.

This invention can be more fully understood from the following detailed description when taken in conjunction with the accompanying drawings, in which:

FIG. 1 is a partially sectioned perspective view showing a nickel-hydrogen secondary battery according to one embodiment of the present invention;
FIG. 2 is a plan view illustrating a manufacturing step of a separator according to the present invention;
FIG. 3 is a sectional view of the separator sectioned along a line III-III in FIG. 2;
FIG. 4 is an enlarged plan view of the separator shown in FIG. 2;
FIG. 5 is a graph showing the relationship between the storage days and the residual capacity ratio of a nickel-hydrogen secondary battery in Examples 1 to 6 of the present invention and Comparative Examples 1 and 2;
FIG. 6 is a sectional view of an apparatus for measuring an inner pressure of a nickel-hydrogen secondary battery in Examples 1 to 6 of the present invention and Comparative Example 1; and
FIG. 7 is a graph showing the relationship between the ratio of cycle number and the ratio of discharge capacity of a nickel-hydrogen secondary battery in Examples 1 to 6 of the present invention and Comparative Example 1.

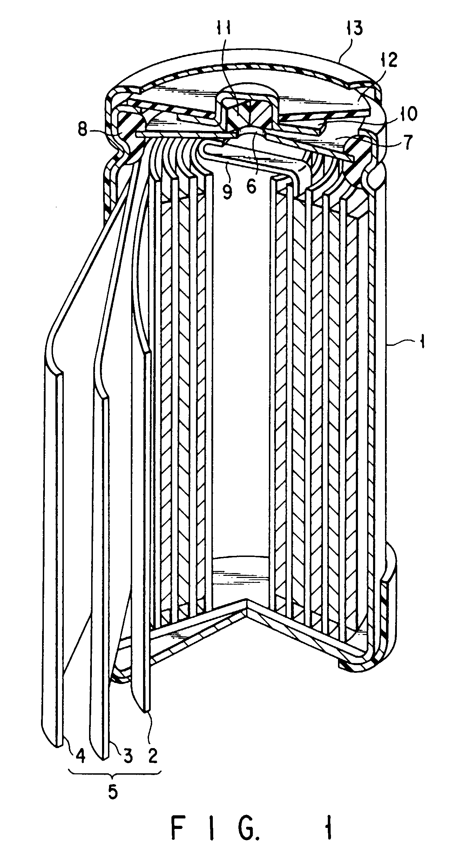

This invention will be further explained with reference to a nickel-hydrogen secondary battery shown in FIG. 1 as follows.

Referring to FIG. 1, a closed-end cylindrical case 1 is accommodated therein with an electrode group 5 which has been manufactured by spirally winding a stacked body consisting of a paste-type positive electrode 2, a separator 3 and a paste-type negative electrode 4. The paste-type negative electrode 4 is disposed at the outermost periphery of the electrode group 5 so as to electrically contact with the cylindrical case 1. The cylindrical case 1 is also filled with an alkali electrolyte. A sealing plate 7 formed of a disk having an opening 6 at the center is disposed on the upper opening of the cylindrical case 1. An insulating gasket 8 having a ring-like shape is interposed between the periphery of the sealing plate 7 and the upper inner wall surface of the opening of the cylindrical case 1. The peripheral fringe portion of the opening of the cylindrical case 1 is caulked inward so that the first sealing plate 7 is hermetically fixed via the gasket 8 to cylindrical case 1. A positive lead 9 is connected through its one end to the positive electrode 2 and through its other end to the lower surface of the sealing plate 7. A positive terminal 10 having a hat-like shape is mounted over the sealing plate 7 in such a manner as to cover the opening 6. A rubber safety valve 11 is disposed in a space surrounded by the sealing plate 7 and the positive terminal 10 in such a manner as to seal the opening 6. A holding plate 12 formed of an insulating disk having an opening is disposed over the positive terminal 10 in such a manner that the projected portion of the positive terminal 10 is protruded out through the opening of the holding plate 12. An envelope tube 13 is disposed to cover all of the periphery of the holding plate 12, the side wall of the cylindrical case 1 and the periphery of the bottom of the cylindrical case 1.

Next, the details of the paste-type positive electrode 2, the separator 3, the paste-type negative electrode 4 and the electrolyte will be explained.

(1) The paste-type positive electrode 2

This paste-type positive electrode 2 can be manufactured by adding a conductive material to an active material, i.e. nickel hydroxide powder, and the resultant mixture is kneaded together with a polymeric binder and water to prepare a paste, which is then stuffed into a conductive substrate and, after being dried, molded into a predetermined shape.

As for the conductive material, cobalt oxide or cobalt hydroxide can be used.

Examples of polymeric binder are carboxymethyl cellulose, methyl cellulose, sodium polyacrylate and polytetrafluoroethylene.

Examples of the conductive substrate are net-like, sponge-like, fibrous and felt-like porous body made of nickel, stainless steel or nickel metallizing metal.

(2) The paste-type negative electrode 4

This paste-type negative electrode 4 can be manufactured by adding a conductive material to a hydrogen-absorbing alloy powder, and the resultant mixture is kneaded together with a polymeric binder and water to prepare a paste, which is then stuffed into a conductive substrate and, after being dried, molded into a predetermined shape.

As for the hydrogen-absorbing alloy, there is no specific limitation and any materials can be employed as far as it is capable of absorbing hydrogen gas generated electrochemically in an electrolyte and readily releasing the hydrogen gas thus absorbed at the time of discharge. Examples of the hydrogen-absorbing alloy are $LaNi_5$, $MmNi_5$, (Mm: misch metal), $LmNi_5$, (Lm: lanthanum-rich misch metal), a multi-element system wherein a portion of Ni of the above mentioned compounds is substituted by an element such as Al, Mn, Co, Ti, Cu, Zn, Zr, Cr and B, or TiNi- or TiFe-based alloy. In particular, a hydrogen-absorbing alloy with composition represented formula $LmNi_xMn_yAz$, wherein Lm represents lanthanum-rich misch metal, A represents at least one element selected from Al and Co, x, y and z are number which meets the equation of $4.8 < x + y + z < 5.4$, is preferred since the charge/discharge cycle life can be improved by discouraging grain size reduction which occurs as the charge/discharge cycle proceeds.

As for the polymeric binder, the same materials as employed for the positive electrode 2 can be used.

As for the conductive material, for example carbon black can be used.

Examples of the conductive substrate are a two-dimensional substrate such as a punched metal, expanded metal, porous copper plate and a nickel net, and a three-dimensional substrate such as a felt-like metallic porous body and a sponge-like metallic substrate.

(3) The separator 3

The separator 3 is formed of a sheet material containing polyolefin-based synthetic resin fibers and has a first surface being made hydrophilic and a second surface located opposite to the first surface, and having a hydrophilic portion and a hydrophobic portion. The separator 3 is interposed between the positive and negative electrodes 2, 4 in such a manner that the second surface is faced toward the negative electrode 4.

Examples of polyolefin-based synthetic resin fibers are polyolefin single fibers, a core-sheath type composite fiber comprising a core material consisting of polyolefin fiber covered by sheath material consisting of another kind of polyolefin and a composite fiber having a partitioned structure wherein different kinds of polyolefin fibers are connected together forming a circular shape. Examples of polyolefin useful in this case are polyethylene and polypropylene.

As for the sheet material containing polyolefin-based synthetic resin fibers, a nonwoven fabric made of the above-mentioned polyolefin fibers, a woven fabric made of the above-mentioned polyolefin fibers or a composite sheet composed of nonwoven fabric and woven fabric may be used. The nonwoven fabric can be manufactured by means of a dry-laid process, a wet-laid process, a spun bond method or a melt blow method. Among them, the spun bond method and melt blow method are preferable in view of capability of manufacturing a nonwoven fabric constituted by fine fibers, which is effective in preventing short between the positive electrode and the negative electrode. In particular, the nonwoven fabric consisting of polyolefin fiber having a mean fiber diameter of 0.1 to 15 μm is preferable in view of preventing short between the positive electrode and the negative electrode.

The hydrophilic portion of the separator may preferably be formed by graft-polymerizing a vinyl monomer having a hydrophilic group which has been adhered in advance on the surface of the sheet material. Examples of a vinyl monomer having a hydrophilic group are acrylic acid, methacrylic acid, esters of acrylic acid or methacrylic acid, vinylpyridine, vinylpyrrolidone, styrene sulfonate, styrene, other compounds having a functional group which is capable of forming a salt through a reaction with an acid or base, or a functional group which is capable of forming a salt through a hydrolysis after being graft-polymerized. Among these vinyl monomers, acrylic acid is most preferable.

The ratio of the graft-copolymerization of the vinyl monomer for forming a hydrophilic portion on the sheet material should preferably be 0.2 to 2.0 meq/g (milli-equivalent per gram) as measured by means of potassium ion exchange capacity to be determined by the titration explained below. If the ion exchange capacity is less than 0.2 meq/g, the ratio of the graft-polymerization at the hydrophilic portion of the separator 3 becomes too low so that the liquid retention of the separator 3 may be lowered. On the other hand, if the ion exchange capacity exceeds over 2.0 meq/g, the operation voltage may be lowered in the occasion of discharging a great amount of electric current in the nickel-hydrogen secondary battery provided with a separator.

(Titration process)

First, 0.5 to 1g of a sample (for example, a polyolefin nonwoven fabric which has been subjected to graft-polymerization with acrylic acid) is taken into a 100 ml polyethylene wide-mouthed bottle and 100 ml of IN-HCl solution was introduced into the bottle. After sinking completely the sample into the solution if the sample is still floating on the surface of the solution, the resultant mixture was left to stand for one hour in a thermostatic chamber kept at a temperature of 60°C. Subsequently, the sample is transferred into a beaker containing 200 ml of ion-exchanged water, and then stirred with a glass rod to wash the sample while exchanging the ion-exchanged water until the pH of the washing liquid becomes 6 to 7. After finishing the washing, the water is removed from the sample, spread over the surface of a stainless steel tray, and then dried in a desiccator cabinet kept at a temperature of 100°C for one hour. After drying the sample, the weight of the sample is measured up to 0.1 mg, and then taken into a 100 ml polyethylene wide-mouthed bottle to which is then added 110g ± 0.01g of 0.01N-KOH. On the other hand, 110g ± 0.01g of 0.01N-KOH as a blank sample is put into a 100 ml polyethylene wide-mouthed bottle.

Thereafter, these bottles are housed in a thermostatic chamber kept at a temperature of 60°C for two hours while gently stirring the solution in these bottles at every 30 minutes. Subsequently, the bottles are gently shaken and then the samples are taken out of the bottles to be cooled down to room temperature.

After being cooled, 100g of each sample is transferred to a 200 ml conical beaker measuring the sample up to 0.01g. Phenolphthalein is used as an indicator, and the sample is subjected to a neutralization titration with 0.1N-HCl solution. The solution of the blank sample is also treated in the same manner and subjected to a neutralization titration with 0.1N-HCl solution. Through this titration, the potassium ion exchange capacity is calculated according to the following equation.

$$I.E.C. = [T_2 \times (S_1/S_2) - T_1]/W_1 \times (E_1/S_1) \times 0.1 \times F$$

wherein,

I.E.C.: Potassium ion exchange degree (meq/g).
$T_1$: The amount (ml) of 0.1N-HCl solution required for the titration of the sample solution (ml).
$T_2$: The amount (ml) of 0.1N-HCl solution required for the titration of the blank sample solution (ml).
$S_1$: The weight of the sample solution taken out (g).
$S_2$: The weight of the blank sample solution taken out (g).
$W_1$: The weight of the sample solution after drying (g).
$E_1$: The weight of 0.01N-KOH solution added (g).
F: Factor of 0.1N-HCl solution.

The hydrophobic portion of the separator is formed by performing a treatment of the sheet material wherein the graft-polymerization of vinyl monomer having a hydrophilic group is hindered, such for example as an embossing treatment of the sheet material so as to partially turning the sheet material into a film. The shape of the embossing is not restricted to any particular shape, but may be a circle, an angular shape such as a square, or a stripe. The hydrophobic portion of the separator can be formed also by laminating a woven fabric consisting of thick polyolefin fibers on a nonwoven fabric, a fabric or a composite sheet material.

The areal ratio of the hydrophobic portion in second surface of the separator should preferably be 2 to 25%. If the areal ratio is less than 2%, it may be difficult to control the increase of the inner pressure of the secondary battery provided with a separator in the occasion of over-charging. On the other hand, if the areal ratio exceeds over 25%, the operation voltage may be lowered in the occasion of discharging a great amount of electric current in the nickel-hydrogen secondary battery provided with a separator. A more preferable range of areal ratio of the hydrophobic portion is 8 to 20%.

In the first surface of the separator 3, the areal ratio of the hydrophobic portion may be 10% or less. If the hydrophobic portion is to be formed on the first surface of the separator, the areal ratio of the hydrophobic portion should be less than that of the first surface of the separator. When a separator having such a structure as explained above is interposed between the paste-type positive electrode and the paste-type negative electrode in such a manner that the second surface of thereof is faced toward the negative electrode, i.e., the first surface of thereof is faced toward the positive electrode, it is possible to retain a greater amount of alkali electrolyte on the positive electrode side of the separator (the first surface) rather than on the negative electrode side. As a result, a sufficient amount of electric field liquid membrane can be formed on the surface of the positive electrode, so that it is possible, due to the interfering action of the electric field liquid membrane, to prevent hydrogen gas generated from the negative electrode from passing through the separator into the positive electrode thereby inhibiting the self-discharge even if the nickel-hydrogen secondary battery provided with a positive electrode, a separator and a negative electrode is stored in a high temperature atmosphere.

It is preferable to control the thickness of the separator 3 to a range of 0.15 mm to 0.3 mm.

The weight per unit area of the separator 3 should preferably be 30 $g/m^2$ to 70 $g/m^2$. If the weight per unit area of the separator 3 is less than 30 $g/m^2$, the strength of the separator 3 may be undesirably lowered. On the other hand, if the weight per unit area of the separator 3 exceeds over 70 $g/m^2$, the capacity of the battery may be lowered. A more preferable range of the weight per unit area of the separator 3 is 40 $g/m^2$ to 60 $g/m^2$.

The separator 3 can be manufactured by the following methods (1) and (2) for example.

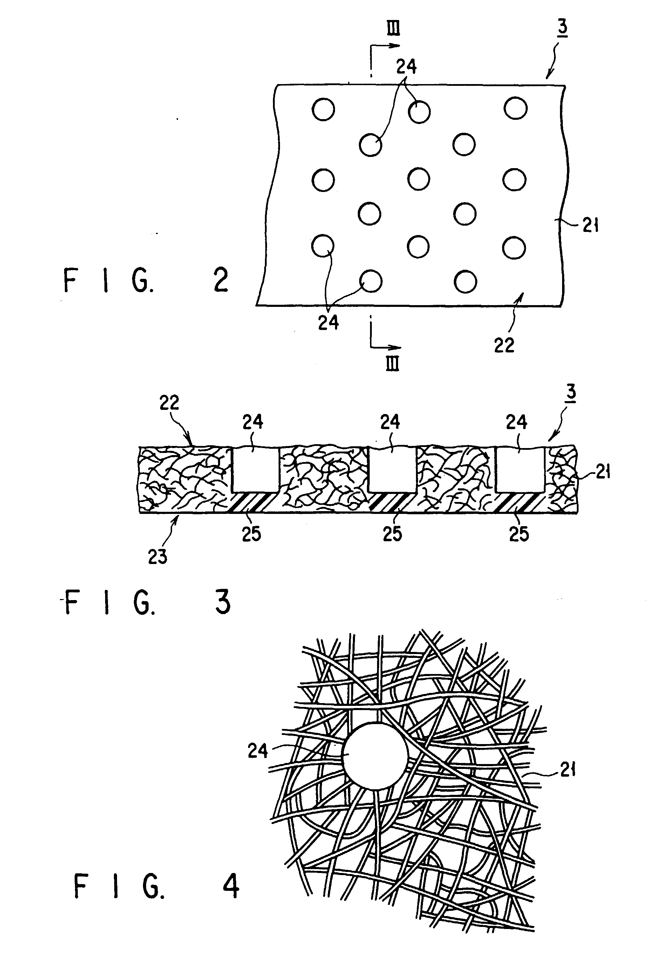

(1) First, a embossing treatment is selectively performed on one surface out of a first surface 22 and a second surface 23, i.e. on the first surface 22 of a sheet material 21 (for example a nonwoven fabric) containing polyolefin synthetic resin fibers as shown in FIGS. 2 to 4. With this embossing treatment, a plurality of circular depressed portions 24 are formed on the sheet material 21 and at the same time the bottom of the depressed portions 24 is transformed into a film-like portion 25 (film portion). Concurrently, a portion of the second surface 23 that corresponds to the depressed portions 24 is also transformed into a film-like portion.

Then, the sheet material is dipped into a solution containing vinyl monomer having a hydrophilic group, and then withdrawn out of the solution. In this treatment, the both of the first and second surface portions which correspond to the film portion 25 are prevented from being coated with the solution, since the these portion are turned into a film 25 as shown in FIG. 3. The surface portions of the first and second surface 22 and 23 of the nonwoven fabric excluding the first and second surface portions which correspond to the film portion 25 are adhered with the solution. In this case, since the depressed portions 24 of the film 25 can be filled with the solution, the whole surface of the depressed portions 24 is contacted with the solution.

Then, an energy beam is irradiated onto the sheet material thereby causing the graft-polymerization of the vinyl monomer at the portions where the solution is adhered. With this polymerization treatment, the whole surface of the first surface of the sheet material is made hydrophilic through the graft-polymerization of the vinyl monomer, whereas in the second surface, the film portion corresponding to the bottom portion of the depressed portions 24 is prevented from being adhered with the solution and other portions excluding this film portion are adhered with the solution, so that only the film portion is remained to be hydrophobic and the other portions are made hydrophilic.

With these processes, a sheet material containing a polyolefin synthetic resin fiber is formed and at the same time a separator having a first surface made hydrophilic and a second surface having a hydrophobic portion and a hydrophilic portion can be obtained.

The embossing treatment on the first surface of the sheet material can be performed by using an apparatus comprising a pair of parallel rolls, each being adapted to be rotated opposite direction to each other, i.e. a first roll having a smooth surface and a second roll having a plurality of pinpoint-shaped projections. In the operation of this apparatus, these rolls are heated to 120 to 180°C for instance and the sheet material is forced to pass through the space between these rolls to press and thermally fuse the polyolefin synthetic resin fibers of the sheet material thereby forming an emboss pattern. The shape of the projections to be formed on the surface of the second roll is not restricted to the pinpoint shape, but any other shape such as square or rhomboid shape may be adopted.

As the energy beam, an ultra-violet ray, an electron beam, an X-ray, and other ionizing radiation can be employed.

(2) First, a sheet material is prepared by superimposing and adhering a large meshed fabric consisting of thick polyolefin synthetic resin fibers on one of the surfaces of nonwoven fabric consisting of polyolefin synthetic resin fibers. In this sheet material, the surface which is not adhered with the fabric is defined as a first surface and the surface which is adhered with the fabric is defined as a second surface. This sheet material is dipped into a solution containing vinyl monomer having a hydrophilic group, and then withdrawn out of the solution. In this treatment, the second surface portions adhering the fabric of thick fibers are prevented from being coated with the solution.

However a portion of nonwoven fabric exposing through the mesh of fabric constituting the second surface and first surface consisting of the nonwoven fabric are adhered with the solution.

Then, an energy beam is irradiated onto the sheet material thereby causing the graft-polymerization of the vinyl monomer at the portions where the solution is adhered. With this polymerization treatment, the whole surface of the first surface of the sheet material is made hydrophilic through the graft-polymerization of the vinyl monomer. On the other hand, since a portion of the nonwoven fabric exposing out of the mesh of the fabric constituting the second surface is adhered with the solution, only the exposed portion is made hydrophilic through the graft-polymerization. Namely, in the second surface, the portion formed of the woven fabric is remained to be hydrophobic, and the other portion is made hydrophilic.

With these processes, a sheet material containing a polyolefin synthetic resin fiber is formed and at the same time a separator having a first surface made hydrophilic and a second surface having a hydrophobic portion and a hydrophilic portion can be obtained.

(4) Alkali electrolyte

Examples of the alkali electrolyte are a mixed solution of sodium hydroxide (NaOH) and lithium hydroxide (LiOH), a mixed solution of potassium hydroxide (KOH) and LiOH, and a mixed solution of NaOH, KOH and LiOH.

In the embodiment shown in FIG. 1, the separator 3 is interposed between the positive and negative electrodes 2, 4, and resultant structure is spirally wound and accommodated in the bottomed cylindrical case 1. However, the nickel-hydrogen secondary battery of this invention is not limited to such a construction. it is also possible to construct a nickel-hydrogen secondary battery in a rectangular shape which is adapted to accommodate an assembly comprising a plurality of laminates, each laminate being composed of a positive electrode, a negative electrode and a separator disposed between the positive and negative electrodes. The separator has a first surface being hydrophilic and a second surface located opposite to the first surface, and having a hydrophilic portion and a hydrophobic portion. The separator is interposed between the positive and negative electrodes in such a manner that the second surface is faced toward the negative electrode.

As explained above, the nickel-hydrogen secondary battery according to the present invention comprises; a case, a paste-type positive electrode accommodated in the case and containing a nickel oxide and a polymeric binder, a paste-type negative electrode accommodated in the case and containing a hydrogen-absorbing alloy and a polymeric binder, a separator accommodated in the case in such a manner as to be interposed between the positive and negative electrodes, and an alkali electrolyte accommodated in the case; wherein the separator is formed of a sheet material containing polyolefin-based synthetic resin fibers and has a first surface being made hydrophilic and a second surface located opposite to the first surface, and having a hydrophilic portion and a hydrophobic portion, the separator being interposed between the positive and negative electrodes in such a manner that the second surface faces toward the negative electrode.

With this construction, it has become possible to produce a three-phase boundary on the surface of the negative electrode contacting with the second surface of the separator which is provided with a hydrophilic portion and a hydrophobic portion. As a result, the consumption rate of oxygen gas, which is generated during an over-charging, in the negative electrode is prominently increased so that the inner pressure of the battery can be greatly reduced. Further, since the absorption rate of hydrogen gas to be generated from the positive electrode in the occasion of a reverse charging can be remarkably increased through the effect of the three-phase boundary thus produced, it has become possible to lower the inner pressure of the battery in the occasion of the reverse charging.

When a separator having such a structure as explained above is interposed between the paste-type positive electrode and the paste-type negative electrode in such a manner that the first surface of thereof faces toward the positive electrode, it is possible to retain a greater amount of alkali electrolyte on the positive electrode side of the separator (the first surface) rather than on the negative electrode side. As a result, a sufficient amount of electric field liquid membrane can be formed on the surface of the positive electrode, so that it is possible, due to the interfering action of the electric field liquid membrane, to prevent hydrogen gas generated from the negative electrode from passing through the separator into the positive electrode thereby inhibiting the self-discharge.

Therefore, with the provision of the separator constructed in this manner, it has become possible according to this invention to secondary battery in such a manner as to be increased at the positive electrode side, the hydrophobic portion being disposed at the negative electrode side. Accordingly, it has become possible to provide an excellent secondary battery which is capable of inhibiting the self-discharge during a high temperature storage of the secondary battery and at the same time inhibiting the increase in inner pressure in the occasion of over-charging.

Further, it has become possible according to the nickel-hydrogen secondary battery of this invention to retain the electrolyte for a long period of time, and to control the increase of inner resistance due to the decrease of the electrolyte.

Since the separator to be used in this invention is provided with a hydrophilic portion which is formed by the graft-copolymerization of the vinyl monomer having a hydrophilic group and the ratio of the graft-copolymerization is controlled to 0.2 to 2.0 meq/g (milli-equivalent per gram) as measured by means of potassium ion exchange capacity to be determined by the titration explained above, it has become possible to improve the retention of the electrolyte and therefore to obtain a nickel-hydrogen secondary battery having a sufficiently decreased inner resistance.

It is possible according to this invention to easily prepare a separator which is formed of a sheet material containing polyolefin-based synthetic resin fibers and has a first surface being made hydrophilic and a second surface having hydrophilic and hydrophobic portions by the process comprising the steps of embossing a first surface of a sheet material containing polyolefin-based synthetic resin fibers thereby forming an embossed film portion; dipping the sheet material into a solution containing a vinyl monomer having a hydrophilic group so as to attaching the solution to the first surface and a second surface which is opposite to the first surface except the embossed film portion; and irradiating an energy beam onto the sheet material thereby graft-polymerizing said vinyl monomer attached to the sheet material.

Since the separator is disposed between the paste-type positive electrode and the paste-type negative electrode in such a manner that the second surface faces toward the negative electrode, it is possible to manufacture a nickel-hydrogen secondary battery which is capable of inhibiting the self-discharge during a high temperature storage of the secondary battery, and at the same time inhibiting the increase in inner pressure in the occasion of over-charging and the increase in inner resistance due to the decrease of the electrolyte.

This invention will be further explained with reference to preferred examples and drawings.

(Example 1)

(Preparation of a paste-type negative electrode)

With the employment of lanthanum-rich misch metal Lm which is available in the market, Ni, Co, Mn and Al, and with the use of a high frequency furnace, a hydrogen-absorbing alloy having a composition of $LmNi_{4.0}Co_{0.4}Mn_{0.3}Al_{0.3}$ was prepared. This hydrogen-absorbing alloy was then pulverized by a mechanical means, and the pulverized material was sieved through a 200 mesh sieve. 100 parts by weight of the hydrogen-absorbing alloy powder thus sieved was mixed with 0.5 part by weight of sodium polyacrylate, 0.125 part by weight of carboxymethyl cellulose (CMC), 2.5 parts by weight of the dispersion of polytetrafluoroethylene (specific gravity: 1.5, solid portion: 60 wt%), 1.0 part by weight of carbon powder (a conductive material) and 50 part by weight of water thereby preparing a paste. This paste was coated over a punched metal, and after being dried, press-molded to form a paste-type negative electrode.

(Preparation of a paste-type positive electrode)

To a mixture consisting of 90 parts by weight of nickel hydroxide powder and 10 parts by weight of cobalt oxide powder are added 0.3 part by weight of carboxymethyl cellulose (CMC) and 0.5 parts by weight (measured as a solid) of the dispersion of polytetrafluoroethylene (specific gravity: 1.5, solid portion: 60 wt%) to obtain a mixture to which 45 parts by weight of demineralized water was added and the mixture was kneaded to prepare a paste. This paste was then filled into a fibrous substrate plated with nickel and then the same paste was coated over the both surfaces of the substrate. After being dried, the substrate was rolled to obtain a paste-type positive electrode.

(Preparation of a separator)

A nonwoven fabric consisting of a mean fiber diameter of 10 μm and having a weight per unit area of 50 $g/m^2$ and a thickness of 0.20 mm was prepared by processing polypropylene resin according to a spun bond method. Then, using an apparatus comprising a pair of parallel rolls, each being adapted to be rotated opposite direction to each other, i.e. a first roll having a smooth surface and a second roll having a plurality of pinpoint-shaped projections and heated to 130°C, the nonwoven fabric was forced to pass through the space between these rolls to be pressed and thermally fused, thereby forming an emboss pattern. As a result, a plurality of circular depressions were formed on the nonwoven fabric, and at the same time a plurality of film-like portions (film portion) were formed on the bottom (embossed surface) of the circular depressions. Concurrently, the portions of the second surface which correspond to the embossed surface were turned into a film. The areal ratio of the film portion was 16% based on the whole area of the second surface of the nonwoven fabric. Thereafter, the nonwoven fabric was dipped into an aqueous acrylic acid solution, and then exposed to the irradiation of ultra-violet ray thereby graft-polymerizing the acrylic acid monomer. The resultant nonwoven fabric was washed to remove unreacted acrylic acid, and then dried thereby obtaining a separator.

The embossed first surface of the separator was found as being entirely made hydrophilic. The whole area excepting the film portion of the second surface of the separator was found also as being made hydrophilic and the film portion of the second surface was remained hydrophobic. Namely, both hydrophilic portion and hydrophobic portion (areal ratio: 16%) were formed on the second surface of the separator. When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes in such a manner that the second surface having a hydrophilic portion and a hydrophobic portion of the separator faces to the negative electrode, and the resultant composite was spirally wound to form an electrode group. This electrode group and an electrolyte comprising 7N of KOH and 1N of LiOH were housed in the closed-end cylindrical case to manufacture a cylindrical nickel-hydrogen secondary battery of AA size as shown in FIG. 1.

(Example 2)

A nonwoven fabric consisting of a mean fiber diameter of 1 μm and having a thickness of 0.2 mm was prepared by processing polypropylene resin according to a melt-blow method. Then, in the same manner as explained in Example 1, the nonwoven fabric was embossed, and then dipped into an aqueous acrylic acid solution. The wet nonwoven fabric was irradiated with ultra-violet ray thereby graft-polymerizing the acrylic acid monomer. As a result, a separator which has a first surface being entirely made hydrophilic, and a second surface having a hydrophilic portion and a hydrophobic portion was obtained.

When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes of the same structure as used in Example 1 in such a manner that the second surface of the separator faces to the negative electrode, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

(Example 3)

A fiber having a lower melting point than that of polypropylene resin was prepared by copolymerizing polypropylene resin with butene. 50% by weight of this fiber and 50% by weight of polypropylene resin fiber were mixed together and formed into a nonwoven fabric by a wet-laid process thereby obtaining a nonwoven fabric having a thickness of 0.2 mm. Then, in the same manner as explained in Example 1, the nonwoven fabric was embossed, and then dipped into an aqueous acrylic acid solution. The wet nonwoven fabric was irradiated with ultra-violet ray thereby graft-polymerizing the acrylic acid monomer. As a result, a separator which has a first surface being entirely made hydrophilic, and a second surface having a hydrophilic portion and a hydrophobic portion was obtained.

When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes of the same structure as used in Example 1 in such a manner that the second surface of the separator faces to the negative electrode, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

(Example 4)

A nonwoven fabric having a thickness of 0.2 mm was prepared by stacking together the nonwoven fabric produced according to the melt-blow method as explained in Example 2 fiber and the nonwoven fabric produced according to the wet-laid process as explained in Example 3. Then, in the same manner as explained in Example 1, the nonwoven fabric was embossed, and then dipped into an aqueous acrylic acid solution. The wet nonwoven fabric was irradiated with ultra-violet ray thereby graft-polymerizing the acrylic acid monomer. As a result, a separator which has a first surface being entirely made hydrophilic, and a second surface having a hydrophilic portion and a hydrophobic portion was obtained. In this embossing process, the embossing was performed from the nonwoven fabric side which was prepared according to the wet-laid process.

When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes of the same structure as used in Example 1 in such a manner that the second surface of the separator faces to the negative electrode, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

(Example 5)

A nonwoven fabric consisting of a mean fiber diameter of 1 µm and having a weight per unit area of 35 g/m$^2$ was prepared by the melt-blow method. On the other hand, another woven fabric having a weight per unit area of 15 g/m$^2$ and a rectangular sectional area 500 µm in width was prepared by knitting polypropylene fibers. Then, the nonwoven fabric mentioned above was stacked on the woven fabric prepared above so as to fusion-bonding them, thus obtaining a composite sheet having a weight per unit area of 50 g/m$^2$.

After the composite sheet being dipped into an aqueous acrylic acid solution, the wet composite sheet was irradiated with ultra-violet ray thereby graft-polymerizing the acrylic acid monomer. As a result, a separator which has a first surface being constituted by the nonwoven fabric and entirely made hydrophilic, and a second surface having hydrophilic portions constituted by the nonwoven fabric exposed from the open mesh and partially hydrophobic portions constituted by the woven fabric was obtained.

When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes of the same structure as used in Example 1 in such a manner that the second surface of the separator faces to the negative electrode, and the resultant composite was spirally wound to form an electrode assembly. This electrode assembly and an electrolyte of the same composition as used in Example 1 were housed in the closed-end cylindrical case to manufacture a cylindrical nickel-hydrogen secondary battery of AA size as shown in FIG. 1.

(Example 6)

A core-sheath type composite fiber comprising a core material consisting of polypropylene fiber covered by a sheath material consisting of polyethylene was prepared. This composite fiber was mixed with polypropylene fiber having a mean diameter of 10 µm at the ratio of 50:50, and the resultant mixture was formed into a nonwoven fabric by a wet-laid process. Then, in the same manner as explained in Example 1, the nonwoven fabric was embossed, and then dipped into an aqueous acrylic acid solution. The wet nonwoven fabric was irradiated with ultra-violet ray thereby graft-polymerizing the acrylic acid monomer. As a result, a separator which has a first surface being entirely made hydrophilic, and a second surface having a hydrophilic portion and a hydrophobic portion was obtained.

When the hydrophilic portion of the separator was measured by a titration method to determine the graft-copolymerization ratio of the acrylic acid monomer, the potassium ion exchange capacity was found 0.8 meq/g.

This separator was disposed between positive and negative electrodes of the same structure as used in Example 1 in such a manner that the second surface of the separator faces to the negative electrode, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

(Comparative Example 1)

A core-sheath type composite fiber comprising a core material consisting of polypropylene fiber covered by a sheath material consisting of polyethylene and having a mean diameter of 15 µm was prepared. On the other hand, a core-sheath type composite fiber comprising a core material consisting of polypropylene fiber covered by a sheath material consisting of ethylene-vinylalcohol copolymer and having a mean diameter of 15 µm was prepared. These composite fibers were mixed together and the resultant mixture was treated by a dry-laid process to form a separator consisting of nonwoven fabric having a weight per unit area of 50 g/m$^2$ and a thickness of 0.20 mm.

This separator was disposed between positive and negative electrodes of the same structure as used in Example 1, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

(Comparative Example 2)

A core-sheath type composite fiber comprising a core material consisting of polypropylene fiber covered by a sheath material consisting of polyethylene and having a mean fiber diameter of 15 µm was prepared. This composite fiber was mixed with polypropylene fiber having a mean diameter of 10 µm at the ratio of 50:50, and the resultant mixture was treated by a wet-laid process to form a nonwoven fabric having a weight per unit area of 50 g/cm$^2$ and a

thickness of 0.2 mm. The nonwoven fabric was inserted between two polyethylene films, and heat-seal treatment was carried out in both sides of the nonwoven fabric to form circular heat-sealed positions having a diameter of 1 mm in a lattice formation. An areal ratio of the circular heat-sealed potions was 16% in the nonwoven fabric. Then, in the same procedure as explained in Example 1, the nonwoven fabric was dipped into an aqueous acrylic acid solution, and then irradiated with ultra-violet ray thereby graft-polymerizing the acrylic acid monomer attached to the nonwoven fabric expected the circular heat-sealed potions. Thereafter, the polyethylene films was removed to obtain a separator. This separator had a hydrophilic portion and a hydrophobic portion on its either surface, and an areal ratio of hydrophilic portion and hydrophobic portion being 84:16.

When the hydrophobic portion of the separator was measured by titration method of to determine the graft-copolymerization ratio of the acrylic acid monomer, the potassium ion exchange capacity was found 0.8 meq/g.

This separator was disposed between the positive and negative electrodes of the same structure as used in Example 1, and the resultant composite was spirally wound to form an electrode group. This electrode group and an electrolyte of the same composition as used in Example 1 were housed in the closed-end cylindrical case to manufacture a cylindrical nickel-hydrogen secondary battery of AA size as shown in FIG. 1.

These secondary batteries obtained in Examples 1 to 6 and Comparative Examples 1 and 2 were subjected to three cycles of charge/discharge wherein each battery was charged to a depth of 150% with an electricity quantity of 1.0 CmA and discharged with a cut of 1.0 CmA/1.0V. Subsequently, the batteries were left to stand, after charging them to a depth of 150% with a current of 1 CmA, in a thermostatic chamber kept at a temperature of 45°C for 14 days. Then, the batteries were allowed to discharge with a current of 1 CmA until the voltages thereof were lowered down to 1.0V and then a discharge capacity (residual capacity) of each battery was measured. The residual ratio of capacity was calculated by the following equation.

$$\text{The residual capacity ratio (\%)} = (C_R/C_0) \times 100$$

wherein $C_0$ represents a discharge capacity measured when the voltage was lowered down to 1.0V as a result of discharge of the battery with a current of 1 CmA after the battery is charged to a depth of 150% with a current of 1 CmA before being stored in the thermostatic chamber kept at a temperature of 45°C for 14 days; and $C_R$ represents a discharge capacity measured immediately after the storage of battery in the thermostatic chamber kept at a temperature of 45°C for 14 days.

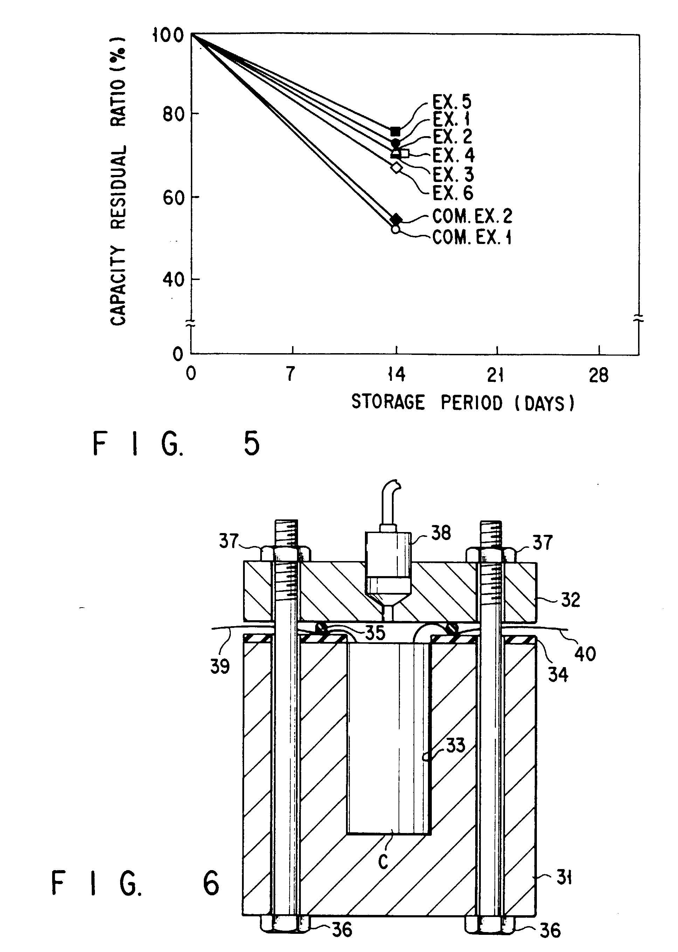

The relationship between the storage period and the residual capacity ratio as calculated from the above equation is shown in FIG. 5. As seen from FIG. 5, the secondary batteries according to Examples of 1 to 6 are superior than the secondary battery in self-discharging property under the condition of a high temperature storage. This can be attributed to the fact that the separators employed in Examples of 1 to 6 are constructed in such a manner that the first surface is entirely made hydrophilic and this hydrophilic first surface is disposed to face the positive electrode so that an electrolyte membrane is formed on the surface of the positive electrode thereby preventing hydrogen gas generated from the paste-type negative electrode containing hydrogen-absorbing alloy during the storage at high temperature from reaching the positive electrode. Therefore, any reducing reaction due to the presence of hydrogen at the positive electrode can be effectively inhibited thereby improving the self-discharge property of the battery during the storage thereof at high temperature.

The secondary battery of Comparative Example 2 has a separator which has a hydrophilic portion and a hydrophobic portion on its either surface. The hydrophobic portions on the surfaces of the separator have the same area. The hydrogen gas generated from the negative electrode passes through the hydrophobic portions of the separator before reaching the positive electrode. The hydrogen gas causes a reducing reaction at the positive electrode, increasing the self-discharge.

Further, the measurement of inner pressure in the secondary batteries obtained in Examples 1 to 6 and Comparative Example 1 was conducted as follows. This measurement of inner pressure was carried out by housing respectively the secondary batteries obtained in Examples 1 to 6 and Comparative Example 1 in the chamber of a pressure measurement apparatus shown in FIG. 6.

Namely, the pressure measurement apparatus is provided with a battery case comprising a main case body 31 made of acrylic resin and cap 32. In the central portion of the main case body 31 is formed a space 33 having the same size of width and height as those of the battery of AA size. In this space 33 is disposed the secondary battery C. The secondary battery C has not a sealing plate. The cap 32 is mounted on the top of the main case body 31 and air-tightly fixed thereon by means of bolt 36 and nut 37 through packing 34 and O-ring 35. On this cap 32 is attached a pressure-detecting device 38. A negative electrode lead 39 and an positive electrode lead 40 extending respectively from the negative electrode and positive electrode are taken out of the main case body 31 through a space between the packing 34 and O-ring 35.

With this pressure measurement apparatus, a measurement of the maximum inner battery pressure of the secondary batteries obtained in Examples 1 to 6 and Comparative Example 1 was carried out when the battery is charged up to the depth of 480% with a current of 0.5 CmA. the results are shown in Table 1 shown below.

Table 1

| | Maximum Inner Battery Pressure |
|---|---|
| Example 1 | 4.8 kg/cm$^2$ |
| Example 2 | 5.3 kg/cm$^2$ |
| Example 3 | 4.2 kg/cm$^2$ |
| Example 4 | 5.4 kg/cm$^2$ |
| Example 5 | 5.5 kg/cm$^2$ |
| Example 6 | 4.3 kg/cm$^2$ |
| Comp. Example 1 | 12.8 kg/cm$^2$ |

As seen from the Table 1, the secondary batteries according to Examples of 1 to 6 are more effective than the secondary battery in inhibiting the increase of inner pressure in the occasion of over-charging. This can be attributed to the fact that the separators employed in Examples of 1 to 6 are constructed in such a manner that the first surface is entirely made hydrophilic and the second surface has hydrophilic portion and hydrophobic portion, and second surface is disposed to face the negative electrode so that a sufficient amount of the three phase boundary can be distributed on the surface of the negative electrode, the three phase boundary providing a site of reaction of consuming oxygen gas to be generated during overcharging. It was confirmed that this improved characteristics is effective not only in the occasion of over-charging, but also in the occasion of reverse-charging which also causes the generation of hydrogen gas.

The secondary batteries obtained in Examples 1 to 6 and Comparative Example 1 were subjected to repeating cycles of charge/discharge wherein each battery was charged to a depth of 150% with an electricity quantity of 1.0 CmA and discharged with a cut of 1.0 CmA/1.0V. The discharge capacity of each battery was calculated by measuring the time required for the voltage of battery to be lowered due to discharge with a current of 1.0 CmA down to 1.0V in every cycle.

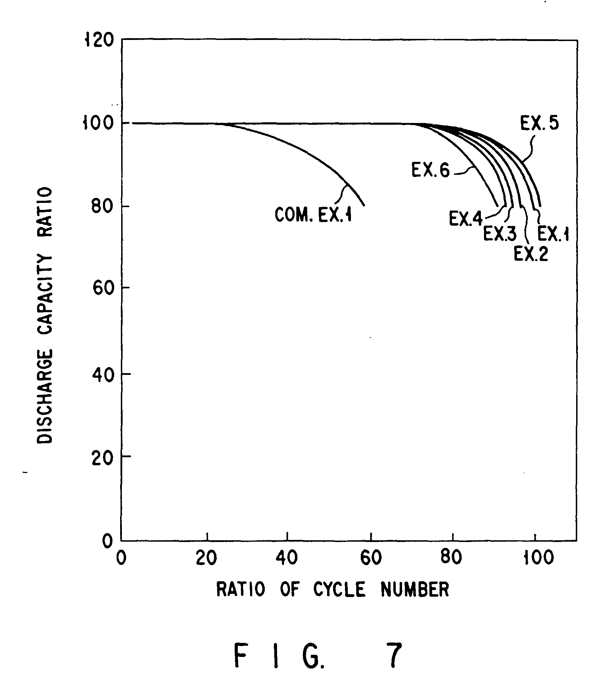

The results of test on the charge/discharge cycle property are shown in FIG. 7. The discharge capacity representing the axis of ordinate of FIG. 7 is indicated by setting the discharge capacity at the first cycle of Example 1 as being 100, on the basis of which values of the discharge capacity of other cycles in Examples 1 to 6 and Comparative Example 1 are shown. The ratio of cycle number representing the axis of abscissa of FIG. 7 is indicated by setting the cycle number at which a discharge capacity was lowered to 80% of the discharge capacity at the first cycle of Example 1 as being 100, on the basis of which the number of cycles in Examples 1 to 6 and Comparative Example 1 are shown.

As seen from FIG. 7, the charge/discharge cycle life of the secondary batteries according to Examples of 1 to 6 is longer than that of the secondary battery. This can be attributed to the fact that the separators employed in Examples of 1 to 6 are constructed in such a manner that the first surface is entirely made hydrophilic through the graft-copolymerization of acrylic acid monomer, thereby making it possible to assure an excellent retention of electrolyte for a long period of time and to inhibit any increase in the inner resistance of the battery.

As explained above, it is possible according to the present invention is to provide a nickel-hydrogen secondary battery and a method of manufacturing the nickel-hydrogen secondary battery wherein a long life of the battery is assured, and at the same time, an improved self-discharging property in a high temperature storage and the inhibition of increase in inner pressure of the battery in the occasion of over-charging can be realized.

**Claims**

1. A nickel-hydrogen secondary battery, comprising:

   a case (1);
   a paste-type positive electrode (2) accommodated in the case (1) and containing nickel hydroxide and a polymeric binder;
   a paste-type negative electrode (4) accommodated in the case (1) and containing a hydrogen-absorbing alloy and a polymeric binder;
   a separator (3) accommodated in the case (1) in such a manner as to be interposed between the positive and negative electrodes (2, 4); and
an alkali electrolyte accommodated in the case (1);
wherein the separator (3) is made of a sheet material containing polyolefin-based synthetic resin fibers and having first and second surfaces opposite to each other,

characterized in that:

the first surface of the separator (3) has a hydrophilic portion and a hydrophobic portion having an areal ratio of 10% or less including 0% based on the area of the first surface, the second surface of the separator has a hydrophilic portion and a hydrophobic portion having an areal ratio of 2 to 25% based on the area of the second surface, and the areal ratio of the hydrophobic portion on the second surface is higher than that on the first surface; and
the separator (3) is interposed between the positive electrode (2) and the negative electrode (4) such that the second surface of the separator (3) faces the negative electrode (4).

2. The secondary battery according to claim 1, characterized in that the hydrogen-absorbing alloy is represented by a formula of $LmNi_xMn_yA_z$, wherein Lm represents lanthanum-rich misch metal, A represents at least one element selected from Al and Co, x, y and z are number which meets an equation of $4.8 < x + y + z < 5.4$.

3. The secondary battery according to claim 1, characterized in that the polyolefin-based synthetic resin fibers are polyethylene fibers and/or polypropylene fibers.

4. The secondary battery according to claim 1, characterized in that the polyolefin-based synthetic resin fibers are core-sheath type composite fibers comprising a core material consisting of polyolefin fibers covered by a sheath material consisting of another kind of polyolefin.

5. The secondary battery according to claim 1, characterized in that the hydrophilic portion of the separator is constituted by a graft-copolymerization of vinyl monomer having a hydrophilic group.

6. The secondary battery according to claim 5, characterized in that a graft-copolymerization ratio of said vinyl monomer constituting said hydrophilic portion of the separator is 0.2 to 2.0 meq/g as measured by means of potassium ion exchange capacity to be determined by a titration.

7. The secondary battery according to claim 5, characterized in that the vinyl monomer having a hydrophilic group is acrylic acid monomer.

8. The secondary battery according to claim 1, characterized in that an areal ratio of hydrophobic portion of the second surface is 8 to 20% of the total area of the second surface.

9. A method for manufacturing a nickel-hydrogen secondary battery comprising a case (1), a paste-type positive electrode (2) accommodated in the case (1) and containing nickel hydroxide and a polymeric binder, a paste-type negative electrode (4) accommodated in the case (1) and containing a hydrogen-absorbing alloy and a polymeric binder, a separator (3) accommodated in the case (1) in such a manner as to be interposed between the positive and negative electrodes (2, 4), and an alkali electrolyte accommodated in the case (1); wherein the separator (3) is formed by the steps of;

embossing a first surface of a sheet material containing polyolefin-based synthetic resin fibers thereby forming an embossed film portion; dipping said sheet material into a solution containing a vinyl monomer having a hydrophilic group so as to attaching the solution to the first surface and a second surface located opposite to the first surface except the embossed film portion; and irradiating an energy beam onto the sheet material thereby graft-polymerizing the vinyl monomer attached to the sheet material;
the separator (3) being interposed between the positive and negative electrodes (2, 4) in such a manner that the second surface is faced toward the negative electrode (4).

10. The method according to claim 9, characterized in that the sheet material is a nonwoven fabric formed of polypropylene.

11. The method according to claim 9, characterized in that the hydrogen-absorbing alloy is represented by a formula

of $LmNi_xMn_yA_z$, wherein Lm represents lanthanum-rich misch metal, A represents at least one element selected from Al and Co, x, y and z are number which meets an equation of $4.8 < x + y + z < 5.4$.

12. The method according to claim 9, characterized in that the polyolefin-based synthetic resin fibers are polyethylene fibers and/or polypropylene fibers.

13. The method according to claim 9, characterized in that the polyolefin-based synthetic resin fibers are core-sheath type composite fibers comprising a core material consisting of polyolefin fibers covered by a sheath material consisting of another kind of polyolefin.

14. The method according to claim 9, characterized in that the embossing process is performed on the first surface of the sheet material at a ratio of 8 to 20% of the total area of the first surface.

15. The method according to claim 9, characterized in that the vinyl monomer having a hydrophilic group is acrylic acid monomer.

16. The method according to claim 9, characterized in that a graft-copolymerization ratio of the vinyl monomer constituting the hydrophilic portion of the separator is 0.2 to 2.0 meq/g as measured by means of potassium ion exchange capacity to be determined by a titration.

17. The secondary battery according to claim 1, wherein the separator (3) has a plurality of depressed portions formed on the first surface and film portions formed on those portions of the second surface which correspond to the depressed portions on the first surface, the hydrophobic portions on the second surface consisting of the film portions, and the hydrophilic portions on the first and second surfaces being formed by graft copolymerization of vinyl monomers having hydrophilic groups.

**Patentansprüche**

1. Nickel-Wasserstoff-Sekundärbatterie, umfassend

ein Gehäuse (1);
eine in dem Gehäuse (1) untergebrachte pastenartige positive Elektrode (2) mit Nickelhydroxid und einem polymeren Bindemittel;
eine in dem Gehäuse (1) untergebrachte pastenartige negative Elektrode (4) mit einer Wasserstoff absorbierenden Legierung und einem polymeren Bindemittel;
ein in dem Gehäuse (1) zwischen die positiven und negativen Elektroden (2, 4) eingefügtes Trennelement (3) und
einen in dem Gehäuse (1) untergebrachten
Alkalielektrolyten, wobei das Trennelement (3) aus einem lagenförmigen Material mit Kunstharzfasern auf Polyolefinbasis besteht und einander gegenüberliegende erste und zweite Oberflächen aufweist, dadurch gekennzeichnet, daß
die erste Oberfläche des Trennelements (3) einen hydrophilen Bereich und einen hydrophoben Bereich mit einem Flächenverhältnis auf der Basis der ersten Oberfläche von 10% oder weniger einschließlich 0% und
die zweite Oberfläche des Trennelements einen hydrophilen Bereich und einen hydrophoben Bereich mit einem Flächenverhältnis auf der Basis der Fläche der zweiten Oberfläche von 2 - 25% aufweisen und das Flächenverhältnis des hydrophoben Bereichs auf der zweiten Oberfläche größer ist als dasjenige auf der ersten Oberfläche, und
das Trennelement (3) zwischen die positive Elektrode (2) und die negative Elektrode (4) derart eingefügt ist, daß die zweite Oberfläche des Trennelements (3) auf die negative Elektrode (4) ausgerichtet ist.

2. Sekundärbatterie nach Anspruch 1, dadurch gekennzeichnet, daß die Wasserstoff absorbierende Legierung der Formel $LmNi_xMn_yA_z$ entspricht, worin bedeuten:

Lm ein lanthanreiches Mischmetall,
A mindestens ein Element, ausgewählt aus Al und Co und
x, y und z Zahlen, die die Gleichung: $4,8 < x + y + z < 5,4$ erfüllen.

3. Sekundärbatterie nach Anspruch 1, dadurch gekennzeichnet, daß es sich bei den Kunstharzfasern auf Polyolefinbasis um Polyethylenfasern und/oder Polypropylenfasern handelt.

4. Sekundärbatterie nach Anspruch 1, dadurch gekennzeichnet, daß es sich bei den Kunstharzfasern auf Polyolefinbasis um Kompositfasern vom Kern/Hülle-Typ, umfassend ein Kernmaterial aus Polyolefinfasern, das von einem Hüllmaterial aus einer anderen Art Polyolefin bedeckt ist, handelt.

5. Sekundärbatterie nach Anspruch 1, dadurch gekennzeichnet, daß der hydrophile Bereich des Trennelements durch Pfropfcopolymerisation eines Vinylmonomers mit einer hydrophilen Gruppe gebildet ist.

6. Sekundärbatterie nach Anspruch 5, dadurch gekennzeichnet, daß das Pfropfcopolymerisationsverhältnis des den hydrophilen Bereich des Trennelements bildenden Vinylmonomers 0,2 - 2,0 mÄq/g, gemessen als durch Titration zu bestimmende Kaliumionenaustauschkapazität, beträgt.

7. Sekundärbatterie nach Anspruch 5, dadurch gekennzeichnet, daß das Vinylmonomer mit einer hydrophilen Gruppe aus einem Acrylsäuremonomer besteht.

8. Sekundärbatterie nach Anspruch 1, dadurch gekennzeichnet, daß der Flächenanteil des hydrophoben Bereichs der zweiten Oberfläche 8 - 20% der Gesamtfläche der zweiten Oberfläche beträgt.

9. Verfahren zur Herstellung einer Nickel-Wasserstoff-Sekundärbatterie, umfassend ein Gehäuse (1), eine in dem Gehäuse (1) untergebrachte pastenartige positive Elektrode (2) mit Nickelhydroxid und einem polymeren Bindemittel, eine in dem Gehäuse (1) untergebracht pastenartige negative Elektrode (4) mit einer Wasserstoff absorbierenden Legierung und einem polymeren Bindemittel, ein derart in dem Gehäuse (1) untergebrachtes Trennelement, daß es zwischen die positiven und negativen Elektroden (2, 4) eingefügt ist, sowie einen in dem Gehäuse (1) untergebrachten Alkalielektrolyten, wobei das Trennelement (3) in folgenden Stufen gebildet wird: Prägen einer ersten Oberfläche eines lagenförmigen Materials mit Kunstharzfasern auf Polyolefinbasis unter Bildung eines geprägten Filmbereichs, Eintauchen des lagenförmigen Materials in eine ein Vinylmonomer mit einer hydrophilen Gruppe enthaltende Lösung, um die Lösung an der ersten Oberfläche und an einer zweiten der ersten Oberfläche gegenüberliegenden Oberfläche mit Ausnahme des geprägten Filmbereichs zum Haften zu bringen, und Bestrahlen des lagenförmigen Materials mit Strahlungsenergie zur Pfropfpolymerisation des an dem lagenförmigen Materials haftenden Vinylmonomers, wobei das Trennelement (3) derart zwischen die positiven und negativen Elektroden (2, 4) eingefügt ist, daß die zweite Oberfläche auf die negative Elektrode (4) hin ausgerichtet ist.

10. Verfahren nach Anspruch 9, dadurch gekennzeichnet, daß das lagenförmige Material aus einem Polypropylenvlies besteht.

11. Verfahren nach Anspruch 9, dadurch gekennzeichnet, daß die Wasserstoff absorbierende Legierung der Formel $LmNi_xMn_yA_z$ entspricht, worin bedeuten:

> Lm ein lanthanreiches Mischmetall,
> A mindestens ein Element, ausgewählt aus Al und Co und
> x, y und z Zahlen, die die Gleichung: $4,8 < x + y + z < 5,4$ erfüllen.

12. Verfahren nach Anspruch 9, dadurch gekennzeichnet, daß die Kunstharzfasern auf Polyolefinbasis aus Polyethylenfasern und/oder Polypropylenfasern bestehen.

13. Verfahren nach Anspruch 9, dadurch gekennzeichnet, daß es sich bei den Kunstharzfasern auf Polyolefinbasis um Kompositfasern vom Kern/Hülle-Typ, umfassend ein Kernmaterial aus Polyolefinfasern, das von einem Hüllmaterial aus einer anderen Art Polyolefin bedeckt ist, handelt.

14. Verfahren nach Anspruch 9, dadurch gekennzeichnet, daß das Prägeverfahren auf der ersten Oberfläche des lagenförmigen Materials in einem Verhältnis von 8 - 20% der Gesamtfläche der ersten Oberfläche durchgeführt wird.

15. Verfahren nach Anspruch 9, dadurch gekennzeichnet, daß das Vinylmonomer mit einer hydrophilen Gruppe aus einem Acrylsäuremonomer besteht.

**16.** Verfahren nach Anspruch 9, dadurch gekennzeichnet, daß das Pfropfcopolymerisationsverhältnis des den hydrophilen Bereich des Trennelements bildenden Vinylmonomers 0,2 - 2,0 mÄq/g, gemessen als durch Titration zu bestimmende Kaliumionenaustauschkapazität, beträgt.

**17.** Sekundärbatterie nach Anspruch 1, wobei das Trennelement (3) eine Mehrzahl von Vertiefungen auf der ersten Oberfläche und Filmbereiche auf solchen Teilen der zweiten Oberfläche, die den Vertiefungen auf der ersten Oberfläche entsprechen, aufweist, wobei die hydrophoben Bereiche auf der zweiten Oberfläche aus den Filmbereichen bestehen und wobei die hydrophilen Bereiche auf den ersten und zweiten Oberflächen durch Pfropfcopolymerisation von Vinylmonomeren mit hydrophilen Gruppen gebildet sind.

## Revendications

**1.** Accumulateur du type nickel-hydrogène, comprenant :

un boîtier (1),
une électrode positive (2) du type d'une pâte logée dans le boîtier (1) et contenant de l'hydroxyde de nickel et un liant polymère,
une électrode négative (4) du type d'une pâte logée dans le boîtier (1) et contenant un alliage d'absorption d'hydrogène et un liant polymère,
un séparateur (3) logé dans le boîtier (1) afin qu'il soit placé entre les électrodes positive et négative (2, 4), et
un électrolyte alcalin logé dans le boîtier (1),
dans lequel le séparateur (3) est formé d'un matériau en feuille contenant des fibres d'une résine synthétique à base de polyoléfine et ayant une première et une seconde surface opposées l'une à l'autre,

caractérisé en ce que

la première surface du séparateur (3) possède une partie hydrophile et une partie hydrophobe ayant un rapport surfacique inférieur ou égal à 10 %, y compris 0 %, par rapport à la première surface, la seconde surface du séparateur a une partie hydrophile et une partie hydrophobe ayant un rapport surfacique de 2 à 25 %, par rapport à l'étendue de la seconde surface, et le rapport surfacique de la partie hydrophobe de la seconde surface est supérieur à celui de la première surface, et
le séparateur (3) est placé entre l'électrode positive (2) et l'électrode négative (4) afin que la seconde surface du séparateur (3) soit tournée vers l'électrode négative (4).

**2.** Accumulateur selon la revendication 1, caractérisé en ce que l'alliage d'absorption d'hydrogène est représenté par la formule $LmNi_xMn_yA_z$, Lm représentant du mischmétal riche en lanthane, A représentant au moins un élément choisi parmi Al et Co, et x, y et z sont des nombres correspondant à la relation $4,8 < x + y + z < 5,4$.

**3.** Accumulateur selon la revendication 1, caractérisé en ce que les fibres de résine synthétique à base de polyoléfine sont des fibres de polyéthylène et/ou des fibres de polypropylène.

**4.** Accumulateur selon la revendication 1, caractérisé en ce que les fibres de résine synthétique à base de polyoléfine sont des fibres composites du type à âme et gaine comprenant un matériau d'âme constitué de fibres de polyoléfine recouvertes d'un matériau de gaine constitué d'un autre type de polyoléfine.

**5.** Accumulateur selon la revendication 1, caractérisé en ce que la partie hydrophile du séparateur est constituée par copolymérisation par greffage d'un monomère vinylique ayant un groupe hydrophile.

**6.** Accumulateur selon la revendication 5, caractérisé en ce que le rapport de copolymérisation par greffage du monomère vinylique constituant la partie hydrophile du séparateur est compris entre 0,2 et 2,0 meq/g mesuré par la capacité d'échange d'ions potassium déterminée par titrage.

**7.** Accumulateur selon la revendication 5, caractérisé en ce que le monomère vinylique ayant un groupe hydrophile est un monomère d'acide acrylique.

**8.** Accumulateur selon la revendication 1, caractérisé en ce que le rapport surfacique de la partie hydrophobe de la seconde surface est compris entre 8 et 20 % de l'étendue totale de la seconde surface.

9. Procédé de fabrication d'un accumulateur du type nickel-hydrogène comprenant un boîtier (1), une électrode positive (2) du type d'une pâte placée dans le boîtier (1) et contenant de l'hydroxyde de nickel et un liant polymère, une électrode négative (4) du type d'une pâte logée dans le boîtier (1) et contenant un alliage d'absorption d'hydrogène et un liant polymère, un séparateur (3) logé dans le boîtier (1) de manière qu'il soit compris entre les électrodes positive et négative (2, 4), et un électrolyte alcalin logé dans le boîtier (1), dans lequel le séparateur (3) est formé par les étapes suivantes :

   le gaufrage d'une première surface d'un matériau en feuille contenant des fibres de résine de synthèse à base de polyoléfine avec formation de cette manière d'une partie de film gaufrée, le trempage du matériau en feuille dans une solution contenant un monomère vinylique ayant un groupe hydrophile pour la fixation de la solution à la première surface et à une seconde surface opposée à la première surface, sauf à la partie de film gaufrée, et l'irradiation du matériau en feuille par un faisceau d'énergie de manière que le monomère vinylique fixé au matériau en feuille soit polymérisé par greffage,
   le séparateur (3) étant disposé entre les électrodes positive et négative (2, 4) afin que la seconde surface soit tournée vers l'électrode négative (4).

10. Procédé selon la revendication 9, caractérisé en ce que le matériau en feuille est un non-tissé formé de polypropylène.

11. Procédé selon la revendication 9, caractérisé en ce que l'alliage d'absorption d'hydrogène est représenté par la formule $LmNi_xMn_yA_z$, Lm représentant du mischmétal riche en lanthane, A représentant au moins un élément choisi parmi Al et Co, et x, y et z sont des nombres qui correspondent à l'équation $4,8 < x + y + z < 5,4$.

12. Procédé selon la revendication 9, caractérisé en ce que les fibres de résine synthétique à base de polyoléfine sont des fibres de polyéthylène et/ou des fibres de polypropylène.

13. Procédé selon la revendication 9, caractérisé en ce que les fibres de résine synthétique à base de polyoléfine sont des fibres composites du type à âme et gaine contenant un matériau d'âme constitué de fibres de polyoléfine recouvertes d'un matériau de gaine constitué d'un autre type de polyoléfine.

14. Procédé selon la revendication 9, caractérisé en ce que l'opération de gaufrage est réalisée à la première surface du matériau en feuille avec un rapport de 8 à 20 % de l'étendue totale de la première surface.

15. Procédé selon la revendication 9, caractérisé en ce que le monomère vinylique ayant un groupe hydrophile est un monomère d'acide acrylique.

16. Procédé selon la revendication 9, caractérisé en ce que le rapport de copolymérisation par greffage du monomère vinylique constituant la partie hydrophile du séparateur est compris entre 0,2 et 2,0 meq/g, mesuré par la capacité d'échange d'ions potassium déterminée par titrage.

17. Accumulateur selon la revendication 1, dans lequel le séparateur (3) a plusieurs parties de cavité formées à la première surface et des parties de film formées sur les parties de la seconde surface qui correspondent aux parties de cavité à la première surface, les parties hydrophobe formées à la seconde surface étant constituées de parties de film, et les parties hydrophiles formées sur les première et seconde surfaces étant formées par copolymérisation par greffage de monomère vinylique ayant des groupes hydrophiles.

F I G. 1

F I G. 2

F I G. 3

F I G. 4

21

EP 0 680 107 B1

F I G. 5

F I G. 6

21

F I G. 7